(19) Europäisches Patentamt
European Patent Office
Office européen des brevets

(11) EP 4 729 592 A1

(12) **EUROPÄISCHE PATENTANMELDUNG**

(43) Veröffentlichungstag:
**22.04.2026 Patentblatt 2026/17**

(21) Anmeldenummer: **24206940.9**

(22) Anmeldetag: **16.10.2024**

(51) Internationale Patentklassifikation (IPC):
***C09K 21/04*** *(2006.01)* ***C08K 3/32*** *(2006.01)*
***C08K 5/3492*** *(2006.01)*

(52) Gemeinsame Patentklassifikation (CPC):
**C09K 21/12; C08K 3/32; C08K 5/34928;**
C08K 2003/323

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Chemische Fabrik Budenheim KG**
**55257 Budenheim (DE)**

(72) Erfinder:
- **GARCIA MARTINEZ, David**
  **50013 Zaragoza (ES)**
- **MOSCHEL, Sebastian**
  **64521 Groß-Gerau (DE)**
- **MOSS, Tobias**
  **64295 Darmstadt (DE)**
- **FUTTERER, Thomas**
  **55218 Ingelheim (DE)**
- **CATALAN, Ana**
  **50781 Alborge (ES)**

(74) Vertreter: **WSL Patentanwälte Partnerschaft mbB**
**Kaiser-Friedrich-Ring 98**
**65185 Wiesbaden (DE)**

(54) **FLAMMSCHUTZMITTELZUSAMMENSETZUNG**

(57) Die Erfindung betrifft eine Flammschutzmittelzusammensetzung, eine Beschichtung und eine Beschichtungsformulierung umfassend dieses Flammschutzmittel, ein Verfahren zur Herstellung der Flammschutzmittelzusammensetzung sowie die Verwendung derselben.

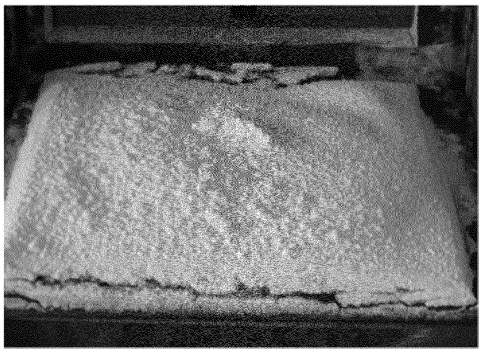

Fig. 2a

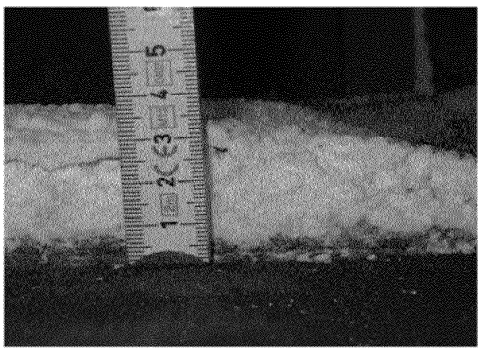

Fig. 2b

EP 4 729 592 A1

## Beschreibung

### GEGENSTAND DER ERFINDUNG

Die Erfindung betrifft eine Flammschutzmittelzusammensetzung, eine Beschichtung und eine Beschichtungsformulierung umfassend dieses Flammschutzmittel, ein Verfahren zur Herstellung der Flammschutzmittelzusammensetzung sowie die Verwendung derselben.

### HINTERGRUND DER ERFINDUNG

Zur Flammschutzausrüstung sind zahlreiche Substanzen bekannt, die alleine oder in Kombination mit weiteren Substanzen eingesetzt werden können, die ähnliche oder synergistische Flammschutzeigenschaften bereitstellen.

Ammoniumpolyphosphat wird beispielsweise als halogenfreies Flammschutzadditiv in verschiedensten flammschützenden Zusammensetzungen eingesetzt. Hierbei wird der Flammschutz durch die Erzeugung einer intumeszierenden Schicht bewirkt, wie es in der DE 19 517 499 A1 beschrieben wird. Im Dokument wird ebenfalls die Herstellung von Ammoniumpolyphosphat ausgehend von $P_2O_5$ und Ammoniumorthophosphat in einer $NH_3$-Atmosphäre offenbart.

Die Flammschutzwirkung der aus dem Stand der Technik bekannten Flammschutzmittel ist daher verbesserungswürdig. Darüber hinaus neigen die Komponenten der Flammschutzmittelzusammensetzung dazu, über die Zeit aus dem zu schützenden Material zu migrieren. Hierdurch wird nicht nur die flammschützende Wirkung noch weiter verringert, mit der Freisetzung sind auch gesundheitliche Risiken verbunden, insbesondere bei Anwendungen im Innenraum.

### AUFGABE

Vor diesem Hintergrund bestand die Aufgabe der vorliegenden Erfindung daher darin, eine vorzugsweise halogenfreie, umweltfreundliche und insbesondere recyclierbare Flammschutzmittelzusammensetzung bereitzustellen, die ähnliche oder sogar bessere Flammschutzeigenschaften als die aus dem Stand der Technik bekannten aufweist und die darüber hinaus eine geringere Migrationsneigung hat, sodass ein dauerhafter und gesundheitlich unbedenklicher Flammschutz insbesondere in Beschichtungsanwendungen erzielt werden kann.

### BESCHREIBUNG DER ERFINDUNG

Diese Aufgabe wird erfindungsgemäß gelöst durch eine Flammschutzmittelzusammensetzung umfassend ein erstes Ammoniumpolyphosphat, einen ersten stickstoffhaltigen Synergisten, und einen zweiten stickstoffhaltigen Synergisten, wobei das erste Ammoniumpolyphosphat mit dem ersten stickstoffhaltigen Synergisten beschichtet ist, wobei der erste stickstoffhaltige Synergist ein Melaminharz ist, und der zweite stickstoffhaltige Synergist ein Polyphosphatsalz ist, und wobei das Polyphosphatsalz Kationen einer 1,3,5-Triazinverbindung umfasst.

Triazine sind eine Gruppe chemischer Verbindungen, deren Grundstruktur ein aromatischer Heterocyclus ist, der drei Stickstoffatome und drei Kohlenstoffatome im sechsgliedrigen Ringsystem umfasst. Eine 1,3,5-Triazinverbindung umfasst mindestens einmal einen symmetrischen 1,3,5-Triazinring, bei welchem sich Kohlenstoff- und Stickstoffatome in der Ringstruktur abwechseln. Derartige Verbindungen zeichnen sich durch eine besonders hohe Flammschutzaktivität aus.

Ein Synergist ist eine Substanz, die, wenn sie in einer Flammschutzmittelzusammensetzung mit einem primären Flammschutzmittel, erfindungsgemäß dem ersten Ammoniumpolyphosphat, kombiniert wird, die Gesamtwirksamkeit der Flammschutzmittelzusammensetzung synergistisch verbessert. Die Wirksamkeit der Kombination von primärem Flammschutzmittel und Synergist ist folglich höher als die Summe der Wirkungen der Einzelkomponenten.

Die erfindungsgemäße Flammschutzmittelzusammensetzung umfasst als Komponenten mindestens das erste Ammoniumpolyphosphat, welches mit einem ersten stickstoffhaltigen Synergisten - einem Melaminharz - beschichtet ist. Die Flammschutzmittelzusammensetzung umfasst weiterhin einen zweiten stockstoffhaltigen Synergisten, nämlich ein Polyphosphatsalz mit Kationen einer 1,3,5-Triazinverbindung.

Natürlich kann die Flammschutzmittelzusammensetzung noch weitere Komponenten wie Füller, Pigmente oder auch zusätzliche Flammschutzmittel umfassen.

Ein Reaktionsraum, auch Reaktionskammer genannt, ist eine kontrollierte Umgebung oder ein Behälter, in dem der erfindungsgemäße Beschichtungsprozess stattfinden kann. Er ist darauf ausgelegt, die erforderlichen Bedingungen für die Reaktion, wie beispielsweise eine geeignete Temperatur, bereitzustellen. Ein Reaktionsraum kann beispielsweise ein Reaktor, ein Kolben oder ein Autoklav sein.

Erzielt werden kann die erfindungsgemäße Ammoniumpolyphosphatbeschichtung durch die üblichen Methoden, beispielsweise durch Kontaktierung des ersten Ammoniumpolyphosphats mit dem Synergisten bei einer Temperatur einer oder beider Reaktionspartner im Bereich von 30-300°C.

Eine Beschichtungsformulierung ist eine Zusammensetzung von Materialien, die in der Beschichtungsindustrie verwendet wird, um eine Schutz- und/oder Dekorschicht auf eine Oberfläche aufzutragen. Derartige Formulierungen können eine Vielzahl von Komponenten, darunter Bindemittel, Lösungsmittel, Pigmente, Füllstoffe, Additive und Flammschutzmittel, enthalten. Das Ziel einer Beschichtungsformulierung ist es, nach Trocknen und damit dem Entstehen der finalen Beschichtung auf dem zu beschichtenden Produkt, wie z.B. Stahl, die gewünschten Eigenschaften wie Feuerfestigkeit, Haftung, Haltbarkeit, Farbe, Glanz, Widerstandsfähigkeit gegenüber Umwelteinflüssen zu erzielen.

Unter Beschichten wird gemäß DIN 8580 ein Verfahren verstanden, bei dem eine festhaftende Schicht aus formlosem Stoff auf die Oberfläche eines Werkstückes aufgebracht wird.

Unter "Harzen" werden erfindungsgemäß Vorstufen von duromeren Kunststoffen, d.h. Polymeren, verstanden (vgl. IUPAC. Compendium of Chemical Terminology, 2nd ed. (the "Gold Book"), A. D. McNaught and A. Wilkinson, Blackwell Scientific Publications, Oxford (1997*),* die insbesondere als Bestandteile von Beschichtungen, Lacken und Farben eingesetzt werden können.

Die Erfinder haben herausgefunden, dass die erfindungsgemäße Kombination aus mit Melaminharzsynergist beschichtetem ersten Ammoniumpolyphosphat und zusätzlichem stickstoffhaltigem Polyphosphatsynergist zu einer signifikanten Verbesserung der Flammschutzeigenschaften führt. Derartige Flammschutzmittelzusammensetzungen weisen darüber hinaus eine geringere Migrationsneigung auf, d.h. das erste Ammoniumpolyphosphat und/oder die Synergisten werden zu einem deutlich geringeren Maße aus dem zu schützenden Material, insbesondere aus einem Polymermaterial, wie einem Polymerbinder einer Beschichtung, ausgewaschen. Hierdurch kann ein dauerhafter und gesundheitlich unbedenklicher Flammschutz, insbesondere bei der Verwendung in Beschichtungen, erzielt werden.

Ohne an diese Theorie gebunden zu sein, gehen die Erfinder davon aus, dass die verbesserte Flammschutzaktivität und die verringerte Migrationstendenz auf die Interaktion zwischen beschichtetem ersten Ammoniumpolyphosphat und Polyphosphat-Triazinverbindung zurückzuführen ist. Ursächlich hierfür könnten intensive Wasserstoffbrückenbindungen, insbesondere zwischen den 1,3,5-Triazinverbindungen, sein, die für eine entsprechende Wechselwirkung sorgen. Hierdurch werden die einzelnen Makromoleküle der Komponenten der Flammschutzmittelzusammensetzung miteinander verbrückt und größere (supramolekulare) Agglomerate gebildet, die deutlich schwerer aus dem Material migrieren, was wiederum zu einer Erhöhung der Flammschutzaktivität führt. Die beiden Synergisten wirken daher als eine Art "supramolekulare Vernetzer" und verstärken somit die Verankerung der Flammschutzmittelzusammensetzung in oder auf dem zu schützenden Material.

Zusätzlich eignen sich Materialien, welche durch erfindungsgemäße Flammschutzmittelzusammensetzungen geschützt werden, besser, um Schwermetall-basierte und/oder halogenhaltige und/oder schwer biologisch abzubauende Flammschutzmittelzusammensetzungen verzichten zu können.

Die Erfindung stellt eine alternative Technologie zur Verfügung, mit welcher intumeszierende Beschichtungen mit freiem Melamin wirkungsvoll ersetzt werden können.

In einer bevorzugten Ausführungsform der Erfindung ist der Gewichtsanteil von erstem stickstoffhaltigem Synergisten an dem Gesamtgewicht des mit dem ersten stickstoffhaltigen Synergisten beschichteten ersten Ammoniumpolyphosphat ≥ 5 Gew.-%, bevorzugt ≥ 7 Gew.-%, stärker bevorzugt S10 Gew.-%, noch stärker bevorzugt ≥ 15 Gew.-%, und am bevorzugtesten ≥ 20 Gew.-% oder sogar ≥ 25 Gew.-%, in der Regel jedoch nicht mehr als 60 Gew.-%.

Bevorzugt liegt der Gewichtsanteil des ersten stickstoffhaltigen Synergisten an dem Gesamtgewicht des mit dem ersten stickstoffhaltigen Synergisten beschichteten ersten Ammoniumpolyphosphats im Bereich von 5 bis 40 Gew.-%, besonders bevorzugt im Bereich von 25-35 Gew.-%.

Die Flammschutzmittelzusammensetzung kann neben dem mit dem **ersten** stickstoffhaltigen Synergisten beschichteten ersten Ammoniumpolyphosphat auch noch weiteres Ammoniumpolyphosphat enthalten, welches unbeschichtet oder mit einer oder mehrerer anderer Substanzen beschichtet ist. Die Flammschutzmittelzusammensetzung kann also ein zweites und/oder drittes Ammoniumpolyphosphat, welches unbeschichtet oder mit einer anderen Substanz als dem ersten stickstoffhaltigen Synergisten, z.B. mit einer Siloxan- und/oder Epoxidbeschichtung, beschichtet ist, enthalten.

Das erfindungsgemäße Polyphosphatsalz muss nicht ausschließlich Kationen der mindestens einen 1,3,5-Triazinverbindung aufweisen, sondern kann auch weitere Kationen, wie beispielsweise Ammoniumionen, umfassen. Um die flammschützende Wirkung zu maximieren, wird der Großteil der Kationen jedoch bevorzugt von Kationen der mindestens einen 1,3,5-Triazinverbindung gebildet.

In einer besonders bevorzugten Ausführungsform beträgt der Stoffmengenanteil der Kationen der mindestens einen 1,3,5-Triazinverbindung an der Stoffmenge der Kationen des Polyphosphatsalzes vorzugsweise ≥ 50%, stärker bevorzugt ≥ 70%, noch stärker bevorzugt ≥ 80%, besonders stark bevorzugt ≥ 90% und am bevorzugtesten ≥ 95%. In einer Ausführung weist das Polyphosphatsalz ausschließlich Kationen der mindestens einen 1,3,5-Triazinverbindung auf.

In einer bevorzugten Ausführung sind die Kationen der 1,3,5-Triazinverbindung, welche Teil des Polyphosphatsalzes des zweiten stickstoffhaltigen Synergisten sind, Kationen von Melamin und/oder von Melaminkondensationsprodukten, wie Melam. Besonders bevorzugt handelt es sich dabei um die protonierte Form von Melamin und/oder dem Melaminkondensationsprodukt. Diese zeichnen sich durch eine besonders hohe synergistische Wirkung aus.

Unter "Kondensationsprodukt" von Melamin werden Moleküle verstanden, die durch eine Kondensationsreaktion von zwei oder mehr Melaminmolekülen entstanden sind, wie z.B. Melam, Melem oder Melon. Beispielhaft sind nachfolgend die beiden Kondensationsprodukte Melam und Melem dargestellt:

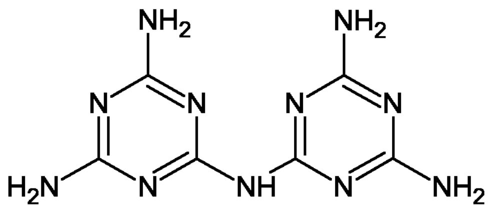

Melam

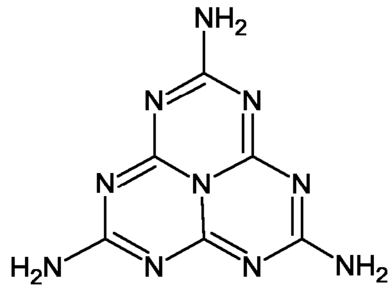

Melem

Eine der möglichen Resonanzstrukturen der protonierten Form von Melam ist nachfolgend dargestellt:

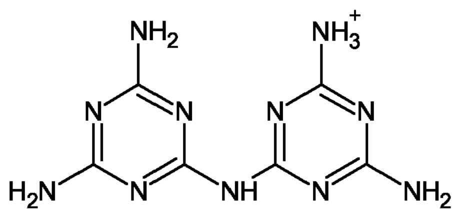

Eine der möglichen Resonanzstrukturen der protonierten Form von Melem ist nachfolgend dargestellt:

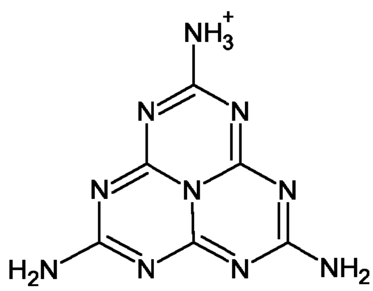

Vorzugsweise ist der erste stickstoffhaltige Synergist ausgewählt aus der Gruppe bestehend aus Melamin-Formaldehyd-Harzen, Melamin-Phenol-Formaldehyd-Harzen, Melamin-Harnostoff-Formaldehyd-Harzen, Hochdruck-Melaminharzen, Niedrigdruck-Melaminharzen oder Mischungen der vorgenannten.

Besonders bevorzugt ist die erfindungsgemäße Flammschutzmittelzusammensetzung halogenfrei. Halogenfrei bedeutet in diesem Zusammenhang, dass der Gewichtsanteil von Halogen an dem Gewicht des Flammschutzmittels ≤ 1 Gew.-%, bevorzugt ≤ 0,5 Gew.-%, besonders bevorzugt ≤ 0,2 Gew.-% und am bevorzugtesten ≤ 0,15 Gew.-% oder sogar ≤ 0,1 Gew.-% beträgt.

Besonders bevorzugt ist die erfindungsgemäße Flammschutzmittelzusammensetzung melaminfrei. Melaminfrei bedeutet in diesem Zusammenhang, dass der Gewichtsanteil von ungebundenem Melamin an dem Gewicht der Flammschutzmittelzusammensetzung ≤ 1 Gew.-%, bevorzugt ≤ 0,5 Gew.-%, besonders bevorzugt ≤ 0,2 Gew.-% und am bevorzugtesten ≤ 0,1 Gew.-% beträgt.

Die erfindungsgemäße Flammschutzmittelzusammensetzung zeichnet sich durch eine besonders geringe Wasserlöslichkeit aus, was insbesondere die Auswaschung der Flammschutzmittelzusammensetzung, beispielsweise aus einer Beschichtung, minimiert und dadurch eine dauerhaft hohe Flammschutzwirkung ermöglicht.

In einer bevorzugten Ausführungsform der Erfindung beträgt die Wasserlöslichkeit der Flammschutzmittelzusammensetzung bei 25°C S15 g/L, vorzugsweise S10 g/L, noch bevorzugter ≤ 5 g/L, noch stärker bevorzugt ≤ 1 g/L und am bevorzugtesten ≤ 0,5 g/L. Die Wasserlöslichkeit wird in diesem Zusammenhang dadurch bestimmt, dass eine 10 Gew.%-ige wässrige Aufschlämmung der Flammschutzmittelzusammensetzung in Wasser bei 25°C hergestellt und nach 30 Min. gemessen wird, wieviel des erfindungsgemäßen Flammschutzmittels sich in Wasser gelöst hat.

Die durch die Oberflächenmodifikation des ersten Ammoniumpolyphosphats erzielten Effekte können selbst bei Ammoniumpolyphosphaten sehr hoher Kettenlänge noch zu Verbesserungen führen und deren positive Flammschutzeigenschaften und die ohnehin geringe Wasserlöslichkeit noch weiter verbessern.

In einer bevorzugten Ausführungsform der Erfindung beträgt der zahlenmittlere Polymerisationsgrad des beschichteten ersten Ammoniumpolyphosphats daher ≥ 50, bevorzugt ≥ 100, bevorzugter ≥ 200, noch stärker bevorzugt ≥ 400 und am bevorzugtesten ≥ 1.000. Der zahlenmittlere Polymerisationsgrad des Ammoniumpolyphosphats gibt die Anzahl der Grundbausteine pro Polymermolekül an und kann aus der zahlenmittleren molaren Masse des Polymermoleküls bestimmt werden. Diese lässt sich im Fall des Ammoniumpolyphosphats beispielsweise durch $^{31}$P-NMR-Spektroskopie, Größenausschlusschromatographie (SEC) und/oder Lichtstreuung bestimmen. Bevorzugt weisen alle in der Flammschutzmittelzusammensetzung enthaltenen Ammoniumpolyphosphate derartige Kettenlängen auf.

Die erfindungsgemäße Flammschutzmittelzusammensetzung zeichnet sich durch eine außerordentlich hohe Zersetzungstemperatur aus. Die Zersetzungstemperatur kann durch thermogravimetrische Analyse (Thermogravimetric Analysis - TGA) bestimmt werden.

In einer bevorzugten Ausführungsform der Erfindung liegt die Zersetzungstemperatur, d.h. die Temperatur, bei der bei einer DSC-Messung ein Masseverlust des trockenen Flammschutzmittels und/oder des trockenen zweiten Synergisten und/oder des mit dem **ersten** stickstoffhaltigen Synergisten beschichteten ersten Ammoniumpolyphosphats von 2 Gew-% bei einer Heizrate von 10 K/min eintritt, ≥ 120°C, bevorzugter ≥ 150°C, besonders bevorzugt ≥ 180°C, noch stärker bevorzugt ≥ 200°C und am bevorzugtesten ≥ 220°C. "Trocken" bedeutet in diesem Zusammenhang, dass der Wassergehalt der Flammschutzmittelzusammensetzung oder der jeweiligen Komponente < 0,5 Gew-% beträgt. Der Wassergehalt kann durch die dem Fachmann bekannten Methoden wie beispielsweise Karl-Fischer-Titration, Bestimmung des Gewichtsverlusts durch Erhitzen der Probe über 105 °C oder NIR-Spektroskopie bestimmt werden.

Die erfindungsgemäße Kombination von beschichtetem erstem Ammoniumpolyphosphat und zweitem Synergisten kann mit Vorteil mit anderen Flammschutzmitteln, z.B. mit solchen, die den Flammschutz durch einen anderen Mechanismus bewirken, eingesetzt werden. Durch die Wechselwirkung von beschichtetem erstem Ammoniumpolyphosphat und/oder zweitem Synergisten mit anderen Flammschutzmitteln kann ein synergistischer Effekt, d.h. ein Effekt, der über die bloße Summe der flammhemmenden Wirkung der einzelnen Komponenten hinausgeht, erzielt werden.

In einer bevorzugten Ausführungsform enthält die Zusammensetzung daher wenigstens eine weitere flammschützende Komponente, die vorzugsweise ausgewählt ist unter Stickstoffbasen, Melaminderivaten, Phosphaten, Pyrophosphaten, Polyphosphaten, organischen und anorganischen Phosphinaten, organischen und anorganischen Phosphonaten und Derivaten der vorgenannten Verbindungen, vorzugsweise ausgewählt unter Ammoniumpolyphosphat, Melamin, Melaminharz, Melaminderivaten, Silanen, Siloxanen, Polysiloxanen, Silikonen oder Polystyrolen beschichteten und/oder beschichteten und vernetzten Ammoniumpolyphosphatpartikeln, sowie 1,3,5-Triazinverbindungen, einschließlich Melamin, Melam, Melem, Melon, Ammelin, Ammelid, 2-Ureidomelamin, Acetoguanamin, Benzoguanamin, Diaminphenyltriazin, Melaminsalze und -addukte, Melamincyanurat, Melaminborat, Melaminorthophosphat, Melaminpyrophosphat, Dimelaminpyrophosphat, Phosphinaten wie Aluminiumdiethylphosphinat oder Diphosphinaten, Melaminpolyphosphat, oligomere und polymere 1,3,5-Triazinverbindungen und Polyphosphate von 1,3,5-Triazinverbindungen, Guanin, Piperazinphosphat, Piperazinpolyphosphat, Ethylendiaminphosphat, Pentaerythritol, Dipentaerythritol, Borphosphat, 1,3,5-Trihydroxyethylisocyanurat, 1,3,5-Triglycidylisocyanurat, Triallylisocyanurat, Zinkboraten, Zinkphosphaten und Mischungen der vorgenannten Verbindungen. In einer bevorzugten Ausführungsform enthält das Polymermaterial für eine bessere Dispergierbarkeit der weiteren Flammschutzkomponente Wachse, Silikone, Siloxane, Fette oder Mineralöle.

Besonders bevorzugt ist als weitere flammschützende Komponente unbeschichtetes oder ein mit einem anderen Synergist als dem ersten Synergist beschichtetes Ammoniumpolyphosphat enthalten.

Eine 10 Gew.%-ige wässrige Aufschlämmung der Flammschutzmittelzusammensetzung weist vorzugsweise einen pH-Wert bei 25°C ≥ 4 auf. Der pH-Wert wird in einer 10 Gew.-%-igen wässrigen Aufschlämmung der erfindungsgemäßen Flammschutzmittelzusammensetzung bestimmt, indem 25 g der Flammschutzmittelzusammensetzung und 225 g reines Wasser von 25°C in einem Gefäß gerührt werden und mit üblichen Mitteln wie einem pH-Meter oder einem Indikatorpapier der pH-Wert der entstandenen wässrigen Suspension bestimmt wird. Besonders bevorzugt ist der pH-Wert im Bereich von 4 bis 10, stärker bevorzugt 5 bis 9, und am bevorzugtesten 5 bis 7.

Durch einen pH-Wert der erfindungsgemäßen Flammschutzmittelzusammensetzung in den oben definierten Bereichen werden Wechselwirkungen mit dem zu schützenden Material und möglichen weiteren Komponenten bei Verwendung in einer Beschichtung(sformulierung) geringgehalten. In der Folge kann das Flammschutzmittel in einer Vielzahl unterschiedlicher Anwendungen, insbesondere für den Schutz pH-sensitiver Materialien, eingesetzt werden.

Vorzugsweise liegt das Gewichtsverhältnis von beschichtetem erstem Ammoniumpolyphosphat zu zweitem Synergisten in der Flammschutzmittelzusammensetzung im Bereich von 3:1 bis 1:5, bevorzugt 3:1 bis 1:3 und am bevorzugtesten 2:1 zu 1:2.

Vorzugsweise liegt der Gewichtsanteil des beschichteten ersten Ammoniumpolyphosphats bzw. des zweiten Synergisten am Gesamtgewicht der Flammschutzmittelzusammensetzung jeweils im Bereich von 5 bis 35 Gew.-%,

vorzugsweise in einem Bereich von 10 bis 20 Gew.-%.

Das in der Flammschutzmittelzusammensetzung enthaltene Gewicht des zweiten stickstoffhaltigen Synergisten beträgt X, das in der Flammschutzmittelzusammensetzung enthaltene Gewicht von mit erstem Synergisten beschichtetem erstem Ammoniumpolyphosphat Y. Die Summe dieser beiden Komponenten ergibt sich folglich aus X+Y. Der Gewichtsanteil einer der Komponenten, beispielsweise Y, ergibt sich somit zu

$$\frac{Y}{X+Y},$$

falls die Flammschutzmittelzusammensetzung keine weiteren Komponenten umfasst.

Jegliche weitere Komponente der Flammschutzmittelzusammensetzung, z.B. zusätzliche Flammschutzkomponenten wie Zinkphosphate, erweitert entsprechend den Nenner obiger Gleichung.

Besonders bevorzugt liegt der Gewichtsanteil der Summe der Gewichte der beiden Komponenten X und Y am Gesamtgewicht der Flammschutzmittelzusammensetzung bei ≥ 50 Gew.-%, bevorzugter≥ 60 Gew.-%, stärker bevorzugt ≥ 70 Gew.-%, noch stärker bevorzugt ≥ 80 Gew.-%, noch erheblich stärker bevorzugt ≥ 90 Gew.-%, und am bevorzugtesten besteht die Flammschutzmittelzusammensetzung aus diesen beiden Komponenten.

Da bei der Beschichtung unter den nachfolgend beschriebenen Verfahrensbedingungen eine im Wesentlichen vollständig quantitative Umsetzung erfolgt, sofern der Gewichtsanteil von Melaminformaldehyd (erster Synergist) an der Gesamtmasse von erstem Synergisten und erstem Ammoniumpolyphosphat nicht größer als 40 Gew.-% ist, können die obigen Gewichtsanteile und -verhältnisse über die Edukteinwaagen, welche bei der Herstellung der Flammschutzmittelzusammensetzung eingesetzt werden, berechnet werden.

In einer bevorzugten Ausführungsform liegt das Gewichtsverhältnis von zweitem Synergisten zu erstem Ammoniumpolyphosphat im Bereich von 5:1 bis 1:5, bevorzugter 2:1 bis 1:2 und am bevorzugtesten 1,5:1 bis 1:1,5.

Die Erfindung betrifft auch eine Beschichtungsformulierung umfassend die erfindungsgemäße Flammschutzmittelzusammensetzung. Der Begriff "Beschichtungsformulierung" ist als ein flüssiges, pastöses oder pulverförmiges Beschichtungsmaterial zu verstehen, das, wenn es auf einen Untergrund aufgetragen wird, eine deckende Beschichtung mit schützenden, dekorativen oder spezifischen technischen Eigenschaften ergibt. Beispiele für Beschichtungsformulierungen sind Lacke oder Firnisse.

Die Hauptbestandteile einer Beschichtungsformulierung sind in der Regel Bindemittel, Füllstoffe, Lösungsmittel und Zusatzstoffe.

Bindemittel sind filmbildende Komponenten der Beschichtungsformulierung, die nach Anwendung der Formulierung auf einem Untergrund und Entfernen des Lösemittels eine Bindemittelmatrix ausbilden, sodass eine Haftung zwischen der finalen Beschichtung und dem Untergrund besteht und die Kohäsion innerhalb der Beschichtung selbst gewährleistet ist. Füllstoffe sind inerte Materialien, die hinzugefügt werden, um die physikalischen Eigenschaften der Beschichtung zu verbessern, wie Härte, Haltbarkeit und Widerstandsfähigkeit gegen Abnutzung. Füllstoffe können auch die Viskosität und die Gesamtwirtschaftlichkeit der Formulierung beeinflussen. Die mechanischen Eigenschaften, die Haltbarkeit und der Widerstand der Beschichtung gegen Umwelteinflüsse werden hauptsächlich sowohl vom Bindemittel als auch vom Füllstoff beeinflusst.

Das Lösungsmittel einer Beschichtungsformulierung löst oder dispergiert das Bindemittel und andere Komponenten, um die Anwendung zu vereinfachen oder erst zu ermöglichen. Lösungsmittel verdunsten nach der Applikation und ermöglichen es der Beschichtung, einen festen Film, die Beschichtung, zu bilden.

Bei dem Bindemittel handelt es sich üblicherweise um einen Polymerbinder, der in der finalen Beschichtung eine Kunststoffbindemittelmatrix ausbildet.

Unter Kunststoffen werden Werkstoffe verstanden, die zu ≥ 50 Gew.-%, vorzugsweise ≥ 70 Gew.-% aus Makromolekülen bestehen.

"Makromoleküle" sind Moleküle, die aus einer oder mehreren gleichen oder ähnlichen Struktureinheiten, den konstitutionellen Repetiereinheiten, aufgebaut sind (IUPAC. Compendium of Chemical Terminology, 2nd ed. (the "Gold Book"), A. D. McNaught, A. Wilkinson, Blackwell Scientific Publications, Oxford (1997), S. J. Chalk. ISBN 0-9678550-9-8). Solche Makromoleküle weisen mehr als 10 Repetiereinheiten, vorzugsweise mehr als 15 Repetiereinheiten auf. Die Molmasse beträgt vorzugsweise mindestens 3.000 g/mol, stärker bevorzugt mindestens 5.000 g/mol, noch stärker bevorzugt mindestens 7.000 g/mol und am bevorzugtesten mindestens 10.000 g/mol.

Das Bindemittel der Beschichtungsformulierung, welches nach Applikation die Kunststoffmatrix ausbildet, ist ausgewählt unter gefüllten und ungefüllten, vorzugsweise quervernetzten Polymeren. Bevorzugt sind Polyurethane, Polyester und Copolyester, Epoxidharze, Phenolharze, Poly(meth)acrylat, Poly vinyl acetate (PVA), Poly vinyl acetate Vinylacetat (VA) Copolymere wie VA/vinyl versatat (W)-Copolymere, VA/Ethylen/W-Copolymere oder VA/Acrylat-Copolymere; und Mischungen der vorgenannten. Besonders bevorzugt ist der Einsatz in Polymethacrylaten und Polyacrylaten, am bevorzugtesten in Polymethylmethacrylaten. In diesem Zusammenhang ist es besonders vorteilhaft, dass der Zusatz des erfindungsgemäßen Flammschutzmittels zu einem transparenten Polymethacrylat bzw. Polyacrylat führt.

In einer bevorzugten Ausführungsform umfasst die Bindemittelmatrix der Beschichtung einen oder mehrere Füllstoffe , insbesondere solche, die ausgewählt sind aus der Gruppe, bestehend aus Metallhydroxiden, insbesondere Erdalkalimetallhydroxiden, Alkalimetallhydroxiden und Aluminiumhydroxiden, Silikaten, insbesondere Schichtsilikaten und funktionalisierten Schichtsilikaten wie Nanokompositen, Bentonit, Erdalkalimetallsilikaten und Alkalimetallsilikaten, Carbonaten, insbesondere Kalziumcarbonat, sowie Talk, Ton, Glimmer, Kieselerde, $TiO_2$; Kalziumsulfat, Bariumsulfat, Aluminiumhydroxid, Magnesiumhydroxid, Glasfasern, Glaspartikeln und Glaskugeln, Holzmehl, Zellulosepulver, Ruß, Graphit, Böhmit und Farbstoffen.

Alle aufgeführten Füllstoffe können sowohl in für Füllstoffe üblicher Form und Größe, die dem Fachmann bekannt sind, als auch in nanoskaliger Form, d.h. als Partikel mit einem durchschnittlichen Durchmesser im Bereich von ungefähr 1 $\mu$m bis 200 $\mu$m, vorliegen.

Zur Verstärkung der Beschichtung und zur Erhöhung ihrer mechanischen Stabilität werden vorzugsweise Glasfasern als Füllstoff zugegeben.

In einer bevorzugten Ausführungsform liegt das Gewichtsverhältnis von Flammschutzmittelzusammensetzung zu Bindemittel in der Beschichtungsformulierung im Bereich von 10:1 bis 1:1, bevorzugt 5:1 bis 1:1 und am bevorzugtesten 4:1 bis 2:1.

Diese Mengenverhältnisse bewirken eine gute Flammschutzwirkung und verhindern gleichzeitig eine signifikante Veränderung der Eigenschaften des Bindemittels bzw. der Bindemittelmatrix sowohl bei der Verarbeitung als auch bei der Verwendung, insbesondere im Hinblick auf die mechanischen Eigenschaften und die Wärmeformstabilität.

Die Erfindung betrifft auch ein Verfahren zur Herstellung der erfindungsgemäßen Flammschutzmittelzusammensetzung. Das Verfahren umfasst nachfolgende Schritte:

a) Zurverfügungstellen eines Reaktionsraumes,
b) Einbringen eines ersten Ammoniumpolyphosphats in den Reaktionsraum,
c) Einbringen eines **ersten** stickstoffhaltigen Synergisten wie in einem der Ansprüche 1-10 oder in den vorherigen Abschnitten definiert in den Reaktionsraum,
d) Beschichten des Ammoniumpolyphosphats mit dem **ersten** stickstoffhaltigen Synergisten, wobei das Ammoniumpolyphosphat und/oder der **erste** stickstoffhaltige Synergist eine Temperatur im Bereich von 30-300°C, bevorzugt 160-200°C, aufweist.
e) Optional: Mischen des beschichteten Ammoniumpolyphosphats mit einem **zweiten** stickstoffhaltigen Synergisten wie in einem der Ansprüche 1-9 oder in den vorherigen

Abschnitten definiert, vorzugsweise im Reaktionsraum, um eine Flammschutzmittelzusammensetzung zu erhalten.

In den Schritten b) und c) werden das erste Ammoniumpolyphosphat sowie der erste stickstoffhaltige Synergist in einen Reaktionsraum eingebracht. Im Anschluss erfolgt in Schritt d) das Beschichten des ersten Ammoniumpolyphosphats. Vorzugsweise beträgt die Temperatur des ersten Ammoniumpolyphosphats und/oder des ersten stickstoffhaltigen Synergisten hierbei 30-300°C. Hierzu kann das erste Ammoniumpolyphosphat und/oder der erste Synergist zunächst auf eine entsprechende Temperatur erhitzt werden, bevor es/sie mit der anderen Komponente kontaktiert wird/werden, oder aber ein Gemisch von erstem Ammoniumpolyphosphat und erstem Synergisten wird entsprechend temperiert.

Das Beschichten kann im einfachsten Fall dadurch erfolgen, dass das erste Ammoniumpolyphosphat und der erste Synergist physikalisch gemischt werden, beispielsweise durch diffusives oder konvektives Mischen. Hierzu kann z.B. ein Trommel- oder Schaufelmischer dienen. Das Beschichten kann jedoch auch dadurch geschehen, dass der erste Synergist und/oder das erste Ammoniumpolyphosphat in einem Lösemittel gelöst bzw. suspendiert werden und dann das Lösemittel durch Trocknung, vorzugsweise bei einem Druck < 1 bar, entfernt wird.

Die obigen Schritte können, müssen aber nicht in der Reihenfolge von a)-e) durchgeführt werden. Der Mischschritt e) kann auch dadurch erfolgen, dass zunächst auch der zweite stickstoffhaltige Synergist in den Reaktionsraum eingebracht wird, d.h. vor dem Beschichten des ersten Ammoniumpolyphosphats mit dem ersten Synergisten. Das Mischen verläuft dann parallel zum Beschichtungsprozess.

In einer bevorzugten Ausführungsform der Erfindung beträgt die Wasserlöslichkeit des unbeschichteten ersten Ammoniumpolyphosphats, welches zur Herstellung des erfindungsgemäß beschichteten ersten Ammoniumpolyphosphats eingesetzt wird, bei 25°C $\leq$ 15 g/L, vorzugsweise $\leq$ 10 g/L, noch bevorzugter $\leq$ 5 g/L, noch stärker bevorzugt $\leq$ 1 g/L und am bevorzugtesten $\leq$ 0,5 g/L. Die Wasserlöslichkeit wird in diesem Zusammenhang dadurch bestimmt, dass eine 10 Gew.%-ige wässrige Aufschlämmung des ersten Ammoniumpolyphosphats in Wasser bei 25°C hergestellt und nach 30 Min. gemessen wird, wieviel des ersten Ammoniumpolyphosphats sich in Wasser gelöst haben.

In einer bevorzugten Ausführungsform der Erfindung beträgt die Wasserlöslichkeit des ersten Synergisten, welcher zur Herstellung des erfindungsgemäß beschichteten ersten Ammoniumpolyphosphats eingesetzt wird, bei 25°C $\leq$ 10 g/L, vorzugsweise $\leq$ 5 g/L, noch bevorzugter $\leq$ 1 g/L, noch stärker bevorzugt $\leq$ 0,5 g/L und am bevorzugtesten $\leq$ 0,1

g/L. Die Wasserlöslichkeit wird in diesem Zusammenhang dadurch bestimmt, dass eine 10 Gew.%-ige wässrige Aufschlämmung des Synergisten in Wasser bei 25°C hergestellt und nach 30 Min. gemessen wird, wieviel des Synergisten sich in Wasser gelöst haben.

Bevorzugt umfasst die Erfindung auch ein Produkt erhältlich durch das vorhergehend definierte Verfahren.

Besonders bevorzugt beträgt die mittlere Teilchengröße D50 der beschichteten Partikel aus erstem Ammoniumpolyphosphat und erstem Synergisten 5 µm bis 30 µm, insbesondere 5 µm bis 20 µm, besonders bevorzugt zwischen 7 µm bis 18 µm, einschließlich der Beschichtung. In diesem Teilchengrößenbereich können Rissbildungen bei der Verwendung als Beschichtung erfolgreich vermieden werden.

Die Erfindung umfasst auch die Verwendung einer Flammschutzmittelzusammensetzung wie vorgehend definiert in einer Flammschutzbeschichtung, insbesondere für Baumaterialien, d.h. Materialien, die in Form von Rohstoffen, Bauhilfsstoffen oder Halbzeugen zum Errichten von Bauwerken benutzt werden, wie Metall, Beton, Kunststoffe oder Holz.

Besonders bevorzugt umfasst die Bindemittelmatrix einer solchen Beschichtung vorzugsweise die erfindungsgemäße Flammschutzmittelzusammensetzung.

Erfindungsgemäß bevorzugt ist auch die Verwendung in einer Flammschutzbeschichtung für Textilmaterialien.

Die vorliegende Erfindung betrifft auch die Verwendung der erfindungsgemäßen Flammschutzmittelzusammensetzung in einer Beschichtungsformulierung, vorzugsweise in einer Beschichtungsformulierung für Holz, Beton, Kunststoff oder Metall.

Besonders bevorzugt ist die Verwendung in einer Beschichtungsformulierung für sogenannte naturfaserverstärkte Kunststoffe, vorzugsweise Wood-Plastic-Composites, d.h. Kompositmaterialien aus Holzfasern und Kunststoffen, ganz besonders bevorzugt für Stahl, insbesondere Baustahl. Bevorzugt ist auch die Verwendung in einer Beschichtungsformulierung für die Beschichtung von Batteriegehäusen, insbesondere von Batteriegehäusen von Elektrofahrzeugen. Die erfindungsgemäße Zusammensetzung ist besonders für solche Beschichtungsanwendungen geeignet, bei denen die Struktur des beschichteten Materials auch nach dem Beschichtungsvorgang sichtbar bleiben soll.

## BEISPIELE

### Ausgangsstoffe:

Tabelle 1: Einzelheiten zu Edukten

| Name | Hersteller | Reinheit/$M_n$ | CAS |
|---|---|---|---|
| Ammoniumpolyphosphat (APP) | Budenheim | 99,9 Gew.-% | 68333-79-9 |
| Melamin | BASF | 99,9 Gew.-% | 108-78-1 |
| Melaminpolyphosphat (MPP) | Budenheim | 99,9 Gew.-% | 218768-84-4 |
| Pentaerythritol ("Penta") | Perstorp | 99,9 Gew.-% | 115-77-59 |
| Additol XW 330 | Allnex | 30,0 Gew.-% | N.A |
| Butyldiglykol | Merck | 99,9 Gew.-% | 111-76-2 |
| Rheolate 255 | Elementis | 25,0 Gew.-% | N.A. |
| Kronos 2063 ($TiO_2$ Pigment) | Kronos | >95,0 Gew.-% | 13463-67-7 |
| Mowilith LDM 2301 | Celanese | 50,0 Gew.-% | N.A. |
| Glas fibre | STW Kautzmann GmbH | 99,9 Gew.-% | N.A. |
| Ammonia, 25 % | Merck | 25,0 Gew.-% | N.A. |

### Messmethoden:

Leistungsfähigkeitsbewertung Flammschutzmittelzusammensetzung

Die Brandschutzwirkung der erfindungsgemäßen Flammschutzmittelzusammensetzung wurde anhand der Norm DIN 4102-Abschnitt 8 bestimmt. Der Brandschutztest der DIN 4102-Abschnitt 8 zielt darauf ab, die Fähigkeit eines Brandschutzsystems zu bewerten, die Temperaturerhöhung in einem Stahlträger oder einer Stahlstütze unter standardisierten Brandbedingungen zu begrenzen. Hierzu wird die Flammschutzmittelzusammensetzung auf ein Stahlbauteil als Beschichtungsformulierung aufgetragen und nach Ausbildung einer Beschichtung dann einer kontrollierten Feuereinwirkung ausgesetzt, die einen realen Brand simuliert. Die Leistung der Flammschutzmittelzusammensetzung wird anhand der Fähigkeit bewertet, die Rate der Temperaturerhöhung innerhalb des Stahlbauteils zu verlangsamen und eine schützende Schaumschicht auszubilden.

## Leitfähigkeitsmessung

Zur Messung der Leitfähigkeit wurden zunächst 7,00 ± 0,05 g einer Probe in einen Kolben abgewogen und 70 ml destilliertes Wasser mit einer automatischen Dosierbürette hinzugefügt. Ein Magnetrührer wurde im Kolben platziert und der Kolben in ein thermostatisches Bad gestellt. Der Thermostat wurde eingeschaltet und die Temperatur auf 25 ± 0,5°C eingestellt. Es erfolgte ein Rühren der Lösung für 30 Minuten. Anschließend wurde die Leitfähigkeit dieser Lösung mit einem Leitfähigkeitsmesser gemessen. Diese Analyse wurde vor der Fortsetzung mit der Löslichkeitsmethode durchgeführt.

## Löslichkeitsmessung

Zur Messung der Löslichkeit wurden 7,00 ± 0,05 g der Probe in einen Kolben abgewogen und 70 ml destilliertes Wasser mit einer automatischen Dosierbürette hinzugefügt. Ein Magnetrührer wurde im Kolben platziert und der Kolben in ein thermostatisches Bad gestellt. Der Thermostat wurde eingeschaltet und die Temperatur auf 25 ± 0,5°C eingestellt. Es erfolgte ein Rühren der Lösung für 30 Minuten. Anschließend wurden 40,00 ± 0,05 g der Lösung in ein Zentrifugenröhrchen abgewogen. Die Zentrifuge wurde eingeschaltet und unter folgenden Bedingungen gestartet: Drehzahl = 4.000 U/min, Zeit = 30 Minuten. Die Röhrchen wurden aus der Zentrifuge genommen und in einen Ständer gestellt. Eine leere Uhrglasschale wurde tariert. Mit einer Einwegpipette, die zweimal mit der Lösung homogenisiert wurde, wurden 3,00 ± 0,05 g der Lösung auf die Schale gegossen und die genaue Menge in einer Excel-Datei notiert. Anschließend wurde die Schale in den Ofen gestellt und eine Stunde lang bei 120°C getrocknet. Schließlich wurde die Schale aus dem Ofen genommen, in einen Exsikkator gestellt und 30 Minuten lang abgekühlt.

## Eintauchtest

Zur Durchführung des Eintauchtests wurde eine kleine Menge Farbgemisch (25-30 g) in einem Kolben vorbereitet und bei 1.800 U/min gerührt. Die Farbe wurde mit einem Applikatorpinsel auf eine Aluminium-Platte aufgetragen (Nassschichtdicke: 1.000 μm). Die Platte wurde 24 Stunden bei Raumtemperatur getrocknet, wobei Luftzug vermieden wurde. Danach wurde die Platte für 24 Stunden in ein Gefäß mit destilliertem Wasser getaucht und im Anschluss das Erscheinungsbild der Platte bewertet.

## Herstellungsbeispiele

### 1. Melaminpolyphosphat beschichtetes APP ("APP MP-coated")

Ein mit einem Rührer ausgestatteter Reaktor wurde auf 300°C erhitzt, eine Inertgasatmosphäre ($N_2$) erzeugt und 10 kg Ammoniumpolyphosphat unter Rühren zugegeben. Sobald die Temperatur des Ammoniumpolyphosphats > 180°C erreichte, wurden 5 kg Melaminpolyphosphat langsam unter ständigem Rühren hinzugefügt und bei konstanter Temperatur für mindestens 1 Stunde gerührt, um eine homogene Mischung zu erhalten, die dann in einem Kühlkessel auf Raumtemperatur abgekühlt wurde.

### 2. Melaminharz beschichtetes APP ("APP MF-coated")

Ein mit einem Rührer ausgestatteter Reaktor wurde auf 150°C erhitzt, eine Inertgasatmosphäre ($N_2$) erzeugt und 10 kg Ammoniumpolyphosphat unter Rühren zugegeben.

Sobald die Temperatur des Ammoniumpolyphosphats > 180°C erreichte, wurden 3,5 kg Melamin-Formaldehyd-Harz Melfores 101 (dispergiert in einer Mischung aus Wasser/Methanol) langsam unter ständigem Rühren zugegeben und bei konstanter Temperatur für mindestens 1 Stunde gerührt, um eine homogene, trockene Mischung zu erhalten, die dann in einem Kühlkessel auf Raumtemperatur abgekühlt wurde.

Tabelle 2: Produkteigenschaften der beschichteten Ammoniumpolyphosphate

| Produkt | pH | Leitfähigkeit [μS/m] | Löslichkeit [g/L] | Freies Melamin (%) | TGA 1% [°C] | TGA 2% [°C] |
|---|---|---|---|---|---|---|
| APP MP-coated | 3.10 | 1139 | 0,135 | 0.023 | 323 | 328 |
| APP MF-coated | 6.65 | 497 | 0.046 | 0.063 | 130 | 212 |

**Herstellung Farbgemisch samt Flammschutzmittelzusammensetzungen**

Es wurden alle Komponenten in der Reihenfolge in einen Kolben hinzugefügt, in der sie in nachfolgender Tabelle 3 erscheinen und hierdurch ein Farbgemisch mit darin enthaltener Flammschutzmittelzusammensetzung erhalten. Initial wurde bei 500 U/min bis zur Zugabe von $TiO_2$ (Kronos 2063) gerührt, dann wurde die Rührgeschwindigkeit auf 1.000 U/min erhöht. Das Farbgemisch war fertig, nachdem alle Komponenten für etwa 30 Minuten homogen gemischt wurden, wobei ein Temperaturanstieg über 40°C stets vermieden wurde.

**Beschichtung**

Das Farbgemisch wurde auf dem Prüfstück (Stahlplatte) mit einem Pinsel verstrichen, bis eine Trockenschichtdicke (DFT) von 700 μm erreicht war (2-3 Schichten). Nachdem die Dicke an allen Punkten bis zu 700 μm betrug (Messung an 10 Punkten), wurde das Prüfstück in einem Heizgerät getrocknet (7 Tage bei 70°C). Bevor das Prüfstück im Ofen gebrannt wurde, wurden die Punkte abgeschliffen, die dicker als 700 μm waren.

Tabelle 3: Komponenten des Farbgemisches mit darin enthaltener Flammschutzmittelzusammensetzunq

| Beispiel | 1 | 2 | 3 | 4 | 5 |
|---|---|---|---|---|---|
| **Wasser** | 18,36 | 18,36 | 16,43 | 16,99 | 18,67 |
| **Additol XW 30** | 0,68 | 0,68 | 0,61 | 0,64 | 0,70 |
| **Butyldiglykol** | 3,44 | 3,44 | 3,07 | 3,18 | 3,49 |
| **Rheolate 255** | 1,14 | 1,14 | 1,02 | 1,06 | 1,17 |
| **APP** | 25,78 | 36,08 | 14,85 | 23,84 | - |
| **APP MF-coated** | - | - | 14 | - | 35,03 |
| **MPP** | - | - | 14 | 17,04 | - |
| **Melamin** | 10,3 | - | - | - | - |
| **Penta** | 10,3 | 10,3 | 9,21 | 9,53 | 10,47 |
| **Kronos 2063** | 9,16 | 9,16 | 8,19 | 8,47 | 9,31 |
| **Mowilith LDM 2301** | 17,18 | 17,18 | 15,35 | 15,88 | 17,45 |
| **Glas fibre** | 3,44 | 3,44 | 3,08 | 3,18 | 3,49 |
| **Ammoniak, 25** % | 0,22 | 0,22 | 0,21 | 0,21 | 0,24 |
| **Summe** | 100 | 100 | 100 | 100 | 100 |

**Leistungsfähigkeitsbewertung Flammschutzmittelzusammensetzungen**

Für die Bewertung der flammschützenden Eigenschaften der Flammschutzmittelzusammensetzungen wurden Tests gemäß der Norm DIN 4102-Abschnitt 8 durchgeführt. Hierzu wurden Beschichtungsformulierungen der Beispiele 1-5 jeweils auf einen Normstahlträger mit einer Schichtdicke der feuchten Schicht von 700 μm (10 Messpunkte) aufgetragen und für 7 Tage bei 70°C getrocknet.

Die Messergebnisse sind in nachfolgender Tabelle 4 dargestellt, die Graphen zur Temperaturentwicklung, sowie fotographische Aufnahmen zur Schaumentwicklung der Beispielzusammensetzungen in den Figuren 1-6, dabei zeigt:

**Fig. 1** Graph zur Entwicklung der Temperatur der beschichteten Stahlprobenträger über die Zeit,

**Fig. 2a/b** Bilder der Schaumbildung für den mit der Formulierung des Beispiels 1 beschichteten Stahlkörper,

**Fig. 3a/b** Bilder der Schaumbildung für den mit der Formulierung des Beispiels 2 beschichteten Stahlkörper,
**Fig. 4a/b** Bilder der Schaumbildung für den mit der Formulierung des Beispiels 3 beschichteten Stahlkörper,
**Fig. 5a/b** Bilder der Schaumbildung für den mit der Formulierung des Beispiels 4 beschichteten Stahlkörper,
**Fig. 6a/b** Bilder der Schaumbildung für den mit der Formulierung des Beispiels 5 beschichteten Stahlkörper,
**Fig. 7** Rasterelektronenmikroskopische Aufnahme unbeschichtetes APP,
**Fig. 8** Rasterelektronenmikroskopische Aufnahme erfindungsgemäß beschichtetes APP (Gewichtsanteil Melaminharz 9 %),
**Fig. 9** Rasterelektronenmikroskopische Aufnahme erfindungsgemäß beschichtetes APP (Gewichtsanteil Melaminharz 26 %).

Tabelle 4: Flammschutzergebnisse

| Beispiel | Zeit bis 500°C [min] | Zeit bis 550°C [min] | Schaumdicke [mm] |
|---|---|---|---|
| **1** | 61 | 66 | 35 |
| **2** | 15 | 18 | 1 |
| **3** | **59** | **65** | **45** |
| **4** | 51 | 59 | 30 |
| **5** | 44 | 49 | ~17 |

Nach 24 Stunden wurde das Erscheinungsbild des beschichteten Normträgers bewertet. Es ist keine signifikante Blasenbildung bei dem erfindungsgemäßen Beispiel 3 aufgetreten. Mit der erfindungsgemäßen Beschichtung wird weniger als 0,1 % freies Melamin in das Extraktionswasser freigesetzt, während bei einer Standardlackformulierung (Beispiel 1) > 6 % freies Melamin unter gleichen Bedingungen in das Extraktionswasser freigesetzt werden.

Wie aus den obigen Ergebnissen ersichtlich, zeichnet sich eine erfindungsgemäße Beschichtung mit darin enthaltener erfindungsgemäßer Flammschutzmittelzusammensetzung durch eine besonders starke Temperaturabschirmung aus, die durch eine hohe Schaumdicke und einen besonders dichten und gleichmäßigen Schaum erzielt wird.

## Patentansprüche

1. **Flammschutzmittelzusammensetzung** umfassend

   - ein **erstes** Ammoniumpolyphosphat,
   - einen **ersten** stickstoffhaltigen Synergisten, und
   - einen **zweiten** stickstoffhaltigen Synergisten,

   wobei das **erste** Ammoniumpolyphosphat zumindest teilweise mit dem **ersten** stickstoffhaltigen Synergisten beschichtet ist,
   **dadurch gekennzeichnet, dass**
   der **erste** stickstoffhaltige Synergist ein Melaminharz ist, und
   der **zweite** stickstoffhaltige Synergist ein Polyphosphatsalz ist,
   wobei das Polyphosphatsalz Kationen einer 1,3,5-Triazinverbindung umfasst.

2. **Flammschutzmittelzusammensetzung** nach Anspruch 1, wobei der Gewichtsanteil von **erstem** stickstoffhaltigem Synergisten an dem mit dem ersten stickstoffhaltigen Synergisten beschichteten **ersten** Ammoniumpolyphosphat ≥ 5 Gew.-%, bevorzugt S10 Gew.-%, noch bevorzugter ≥ 15 Gew.-%, und am bevorzugtesten ≥ 25 Gew.-%, beträgt.

3. **Flammschutzmittelzusammensetzung** nach einem der vorausgehenden Ansprüche, wobei die Flammschutzmittelzusammensetzung ein zweites Ammoniumpolyphosphat umfasst, welches unbeschichtet ist.

4. **Flammschutzmittelzusammensetzung** nach einem der vorausgehenden Ansprüche, wobei die Kationen der mindestens einen 1,3,5-Triazinverbindung ≥ 90% des Gesamtanteils der Kationen des Polyphosphatsalzes ausmachen.

5. **Flammschutzmittelzusammensetzung** nach einem der vorausgehenden Ansprüche, wobei die 1,3,5-Triazinverbindung, deren Kation, der **zweite** stickstoffhaltige Synergist umfasst, ausgewählt ist aus der Gruppe bestehend aus Melamin, Melam, Melem, Melon, vorzugsweise Melamin.

6. **Flammschutzmittelzusammensetzung** nach einem der vorausgehenden Ansprüche, wobei der **erste** stickstoffhaltige Synergist ausgewählt ist aus der Gruppe bestehend aus Melamin-Formaldehyd-Harzen, Melamin-Phenol-Formaldehyd-Harzen, Melamin-Harnostoff-Formaldehyd-Harzen, Hochdruck-Melaminharzen, Niedrigdruck-Melaminharzen oder Mischungen der vorgenannten.

7. **Flammschutzmittelzusammensetzung** nach einem der vorausgehenden Ansprüche, wobei die Wasserlöslichkeit der Flammschutzmittelzusammensetzung ≤ 10 g /1 L, vorzugsweise ≤ 5 g / L beträgt.

8. **Flammschutzmittelzusammensetzung** nach einem der vorausgehenden Ansprüche, wobei der zahlenmittlere Kondensationsgrad des mit dem **ersten** stickstoffhaltigen Synergisten beschichteten **ersten** Ammoniumpolyphosphats ≥ 50, bevorzugt ≥ 100 oder sogar ≥ 1.000, beträgt.

9. **Flammschutzmittelzusammensetzung** nach einem der vorausgehenden Ansprüche, wobei der pH-Wert einer 10 Gew.-%igen Aufschlämmung der Flammschutzmittelzusammensetzung einen pH-Wert bei 25°C im Bereich von 4-9 aufweist.

10. **Beschichtungsformulierung** umfassend ein Bindemittel, ein Lösemittel sowie eine Flammschutzmittelzusammensetzung wie in einem der vorausgehenden Ansprüche definiert.

11. **Beschichtungsformulierung** nach Anspruch 10, wobei das Gewichtsverhältnis von Flammschutzmittelzusammensetzung zu Bindemittel in der Beschichtungsformulierung im Bereich von 10:1 bis 1:1 liegt, bevorzugt 5:1 bis 1:1 und am bevorzugtesten 4:1 bis 2:1.

12. **Beschichtung** umfassend eine Bindemittelmatrix sowie eine darin eingebettete Flammschutzmittelzusammensetzung wie in einem der vorausgehenden Ansprüche definiert.

13. **Satz von Chemikalien** zur Herstellung einer **Flammschutzmittelzusammensetzung** wie in einem der Ansprüche 1-9 definiert oder zur Herstellung einer **Beschichtungsformulierung** wie in einem der Ansprüche 10 oder 11 definiert oder zur Herstellung einer **Beschichtung** nach Anspruch 12, umfassend:

   - ein **erstes** Ammoniumpolyphosphat,
   - einen **ersten** stickstoffhaltigen Synergisten, und
   - einen **zweiten** stickstoffhaltigen Synergisten,

   wobei das **erste** Ammoniumpolyphosphat zumindest teilweise mit dem **ersten** stickstoffhaltigen Synergisten beschichtet ist,
   **dadurch gekennzeichnet, dass**
   der **erste** stickstoffhaltige Synergist ein Melaminharz ist, und
   der **zweite** stickstoffhaltige Synergist ein Polyphosphatsalz ist,
   wobei das Polyphosphatsalz Kationen einer 1,3,5-Triazinverbindung umfasst.

14. **Verfahren** zur Herstellung einer **Flammschutzmittelzusammensetzung** nach einem der Ansprüche 1-9, umfassend nachfolgende Schritte:

   a) Zurverfügungstellen eines Reaktionsraumes,
   b) Einbringen eines **ersten** Ammoniumpolyphosphats in den Reaktionsraum,
   c) Einbringen eines **ersten** stickstoffhaltigen Synergisten wie in einem der Ansprüche 1-9 definiert in den Reaktionsraum,
   d) Beschichten des **ersten** Ammoniumpolyphosphats mit dem **ersten** stickstoffhaltigen Synergisten, wobei das Ammoniumpolyphosphat und/oder der **erste** stickstoffhaltige Synergist eine Temperatur im Bereich von 50-300°C, bevorzugt 160-200°C, aufweist.
   e) Optional: Mischen des beschichteten **ersten** Ammoniumpolyphosphats mit einem **zweiten** stickstoffhaltigen Synergisten wie in einem der Ansprüche 1-9 definiert, vorzugsweise im Reaktionsraum, um eine Flammschutzmittelzusammensetzung zu erhalten,

wobei die obigen Schritte vorzugsweise in der Reihenfolge a)-e) durchgeführt werden.

15. **Verwendung** einer Flammschutzmittelzusammensetzung nach einem der vorausgehenden Ansprüche in einer Flammschutzbeschichtung für Baustoffe wie Stahl oder Holz oder Textilmaterialien.

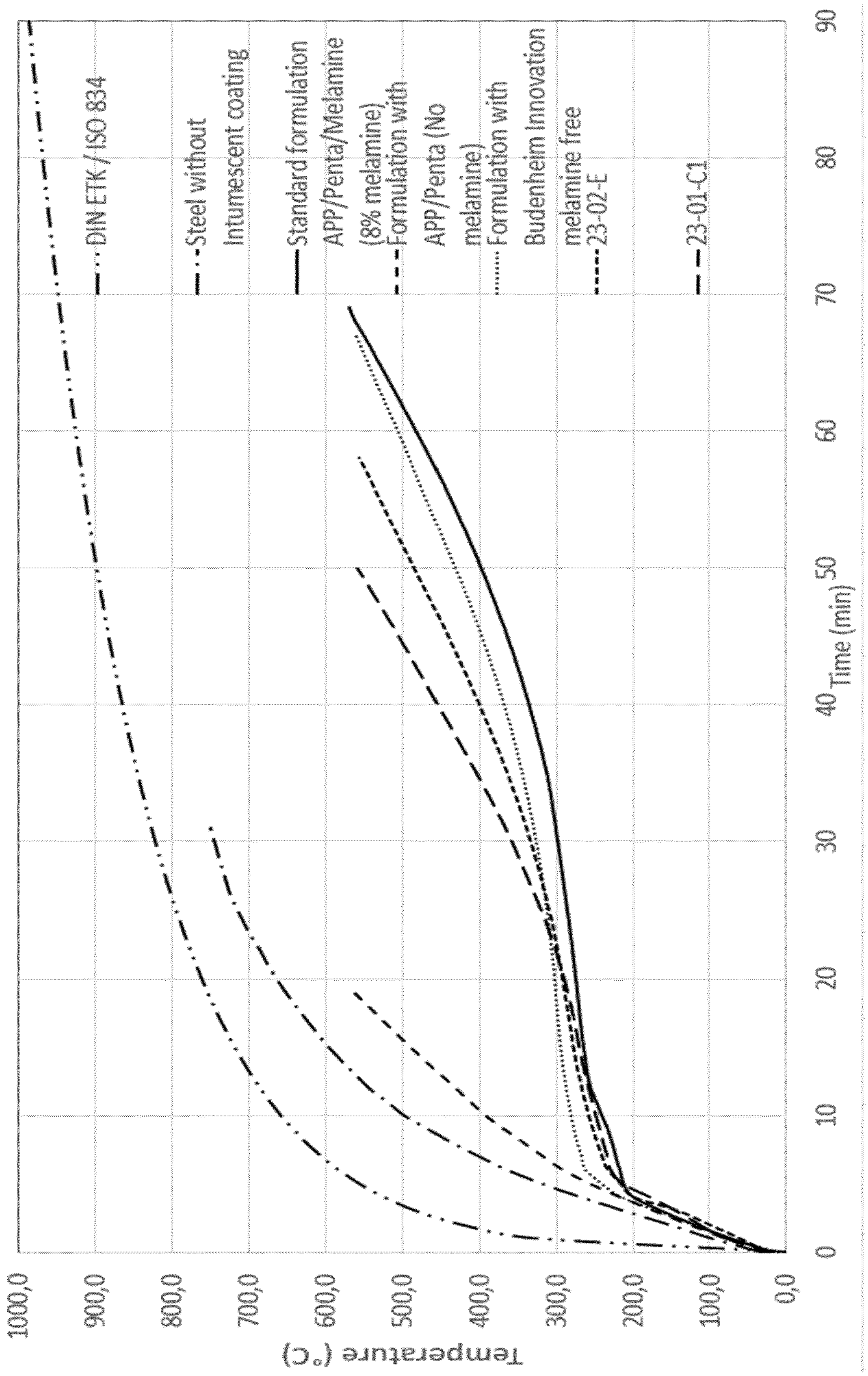
DIN ETK / ISO 834
Steel without Intumescent coating
Standard formulation APP/Penta/Melamine (8% melamine)
Formulation with APP/Penta (No melamine)
Formulation with Budenheim Innovation melamine free
23-02-E
23-01-C1
Time (min)
0
10
20
30
40
50
60
70
80
90
Temperature (°C)
0,0
100,0
200,0
300,0
400,0
500,0
600,0
700,0
800,0
900,0
1000,0

Fig. 1

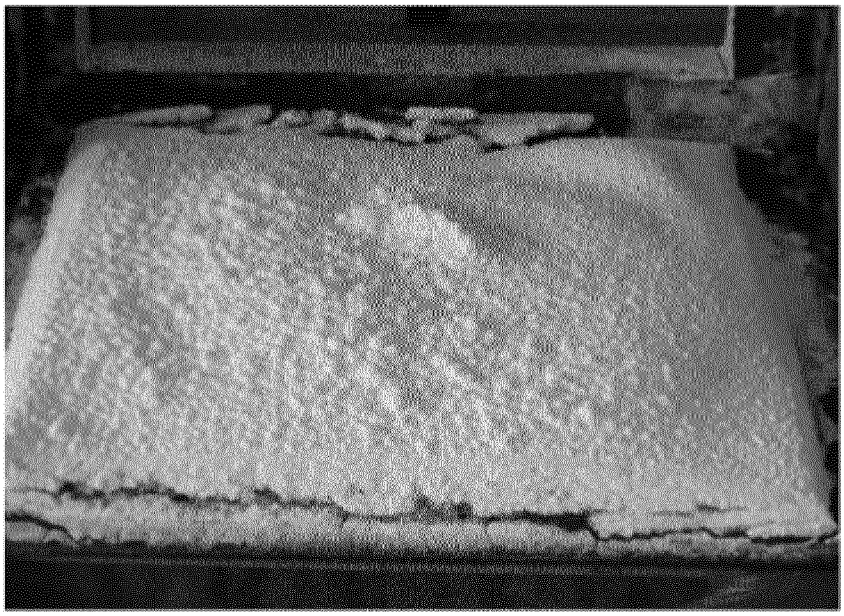

Fig. 2a

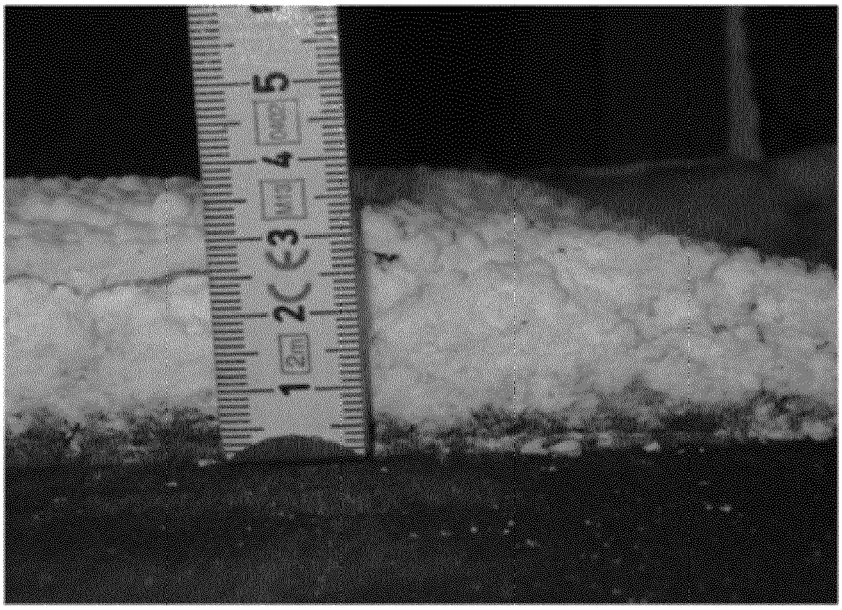


Fig. 2b

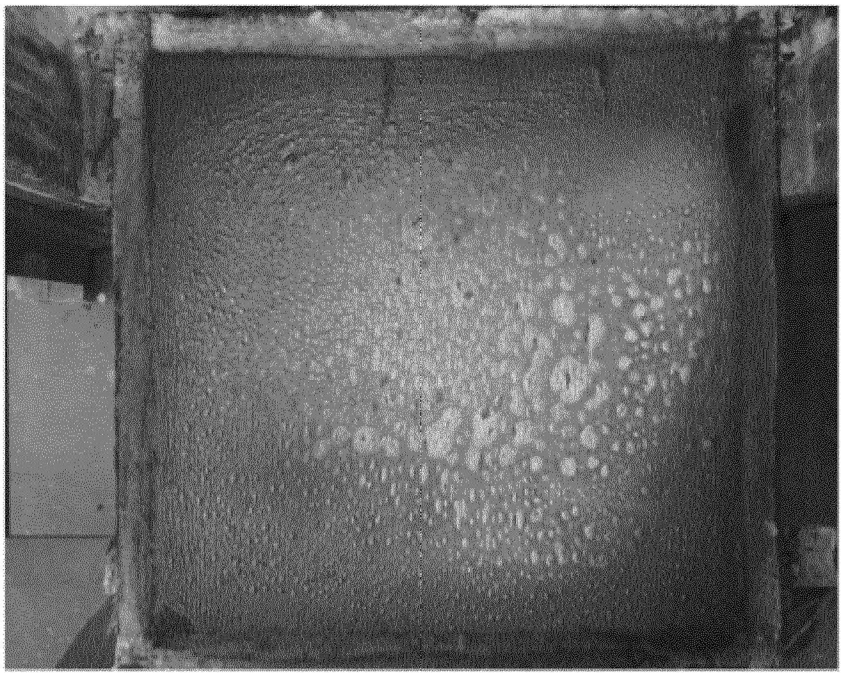

Fig. 3a

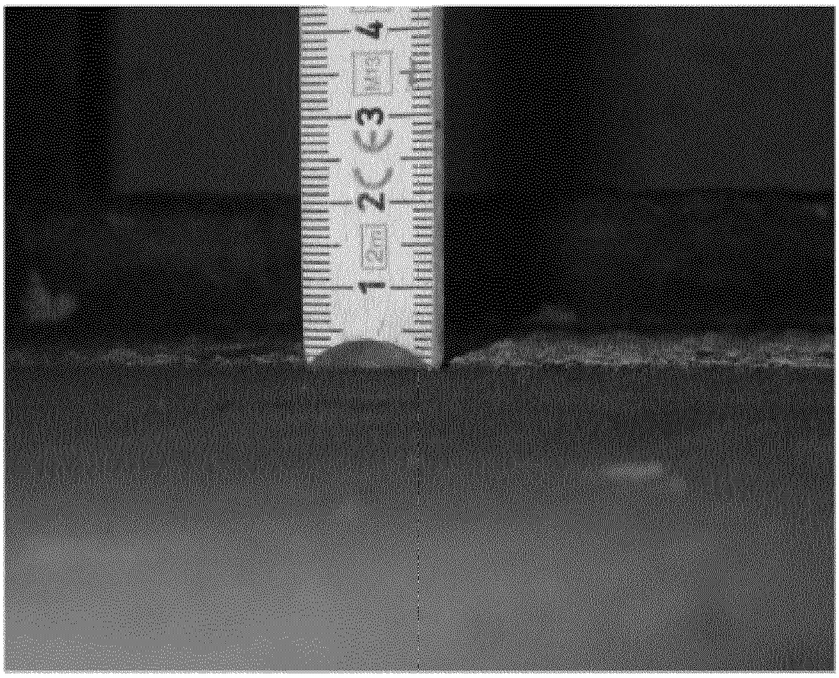

Fig. 3b

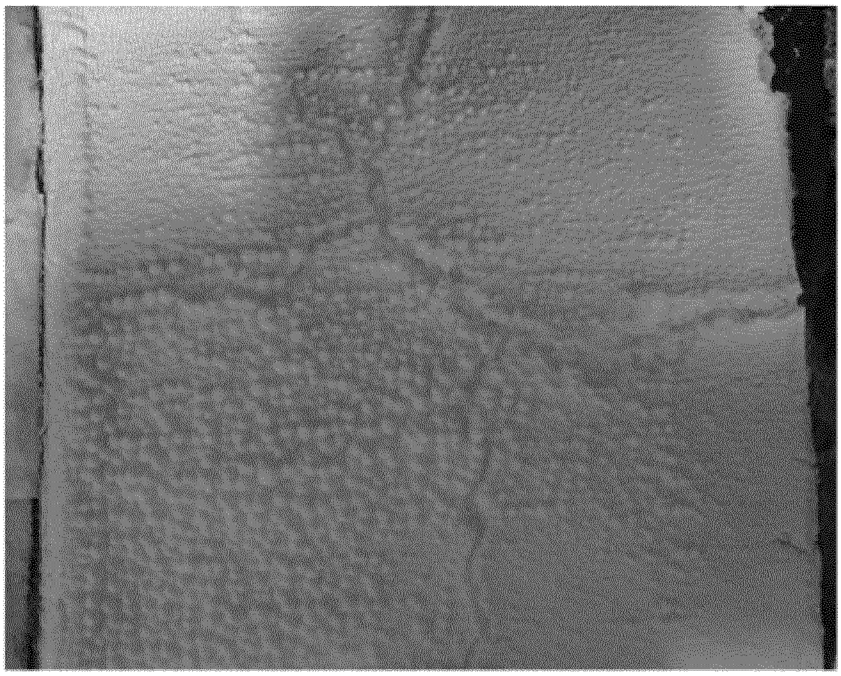

Fig. 4a

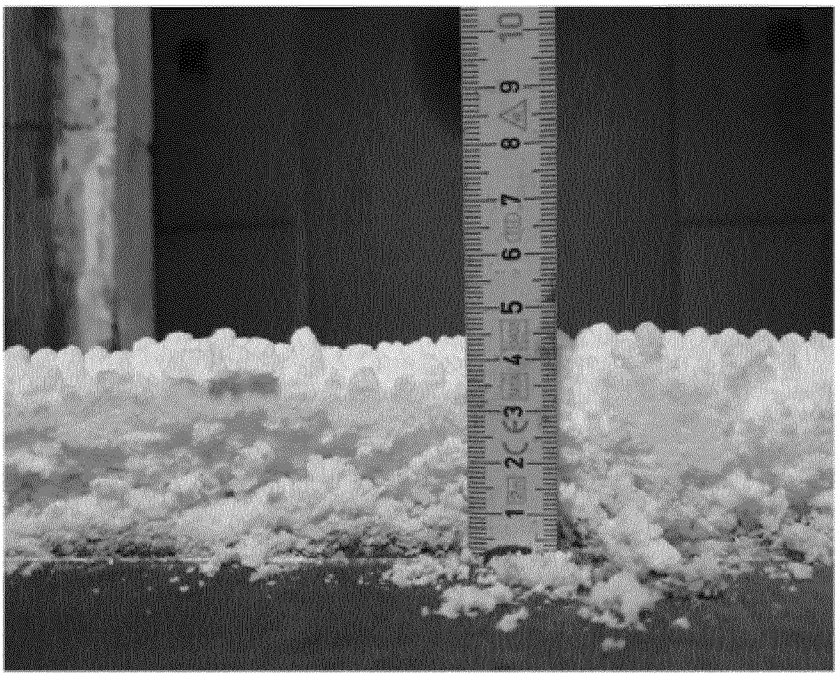


Fig. 4b

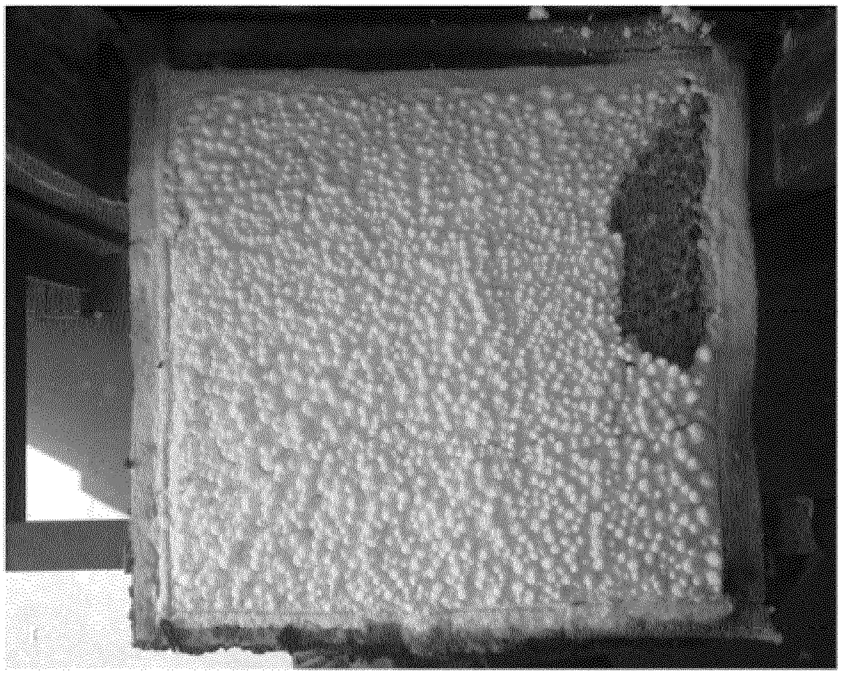

Fig. 5a

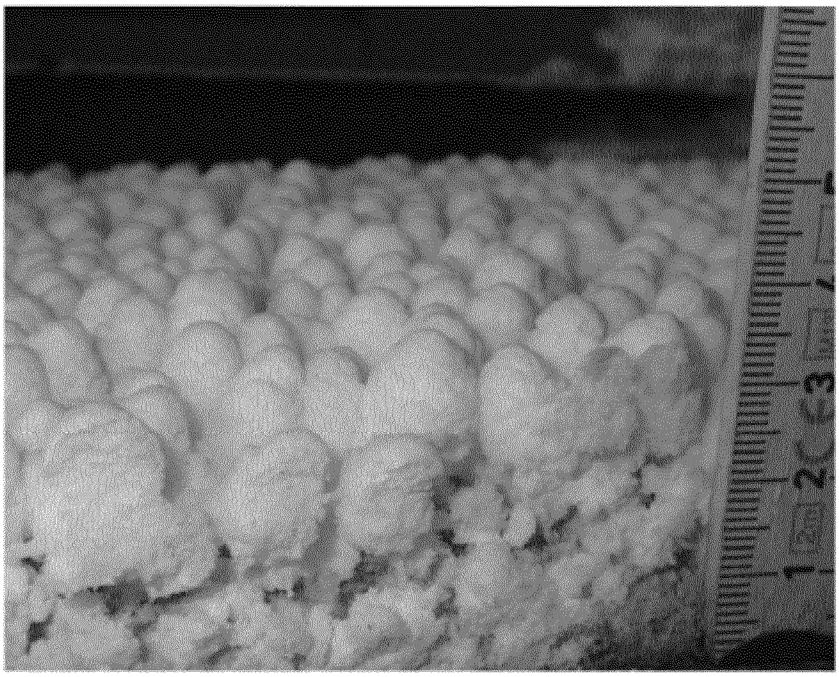

Fig. 5b

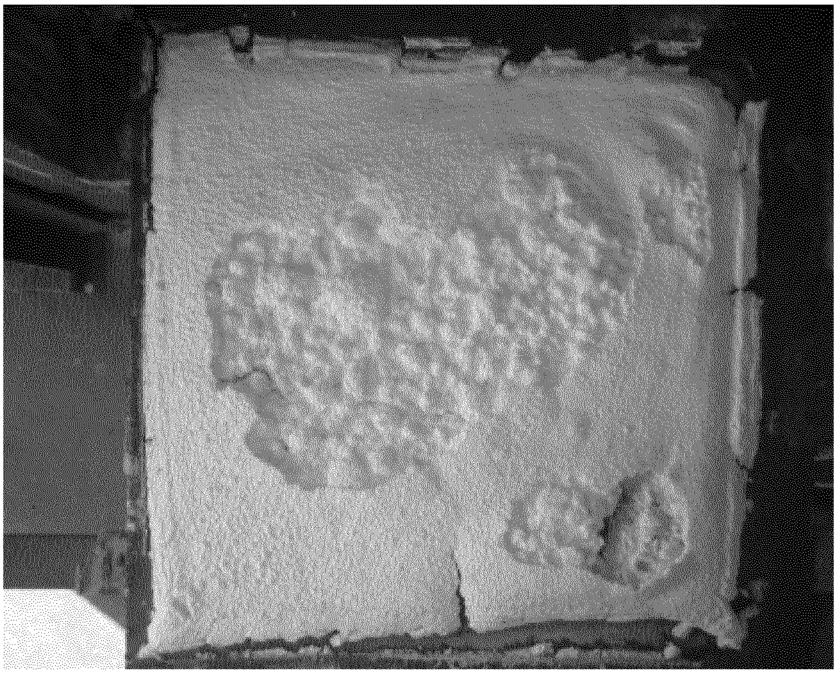

Fig. 6a

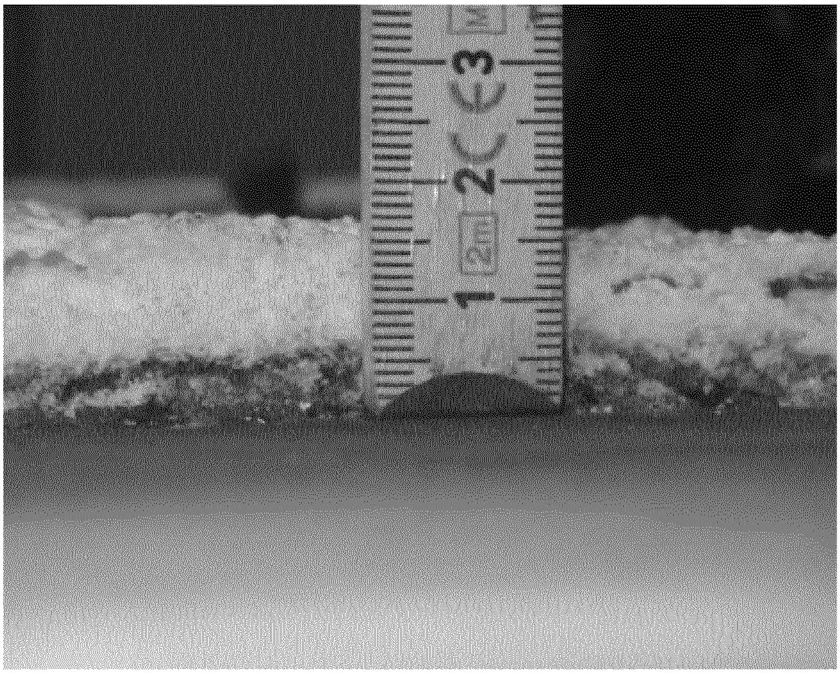


Fig. 6b

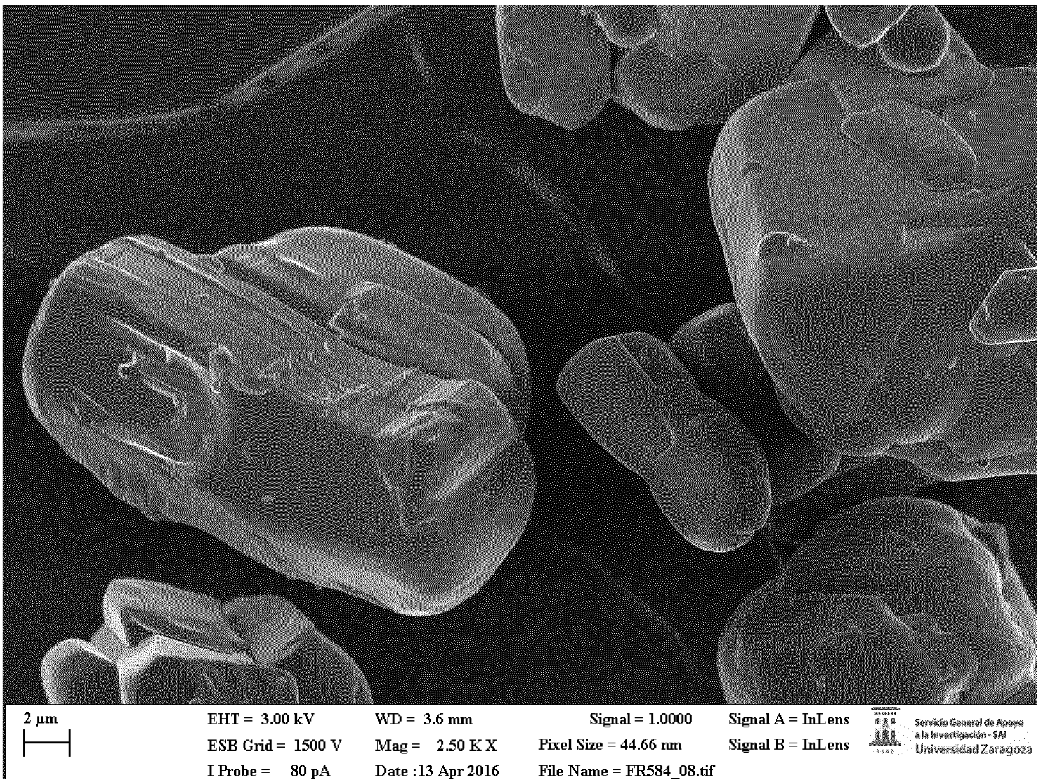
2 µm
EHT = 3.00 kV
ESB Grid = 1500 V
I Probe = 80 pA
WD = 3.6 mm
Mag = 2.50 K X
Date :13 Apr 2016
Signal = 1.0000
Pixel Size = 44.66 nm
File Name = FR584_08.tif
Signal A = InLens
Signal B = InLens
Servicio General de Apoyo a la Investigación - SAI
Universidad Zaragoza

Fig. 7

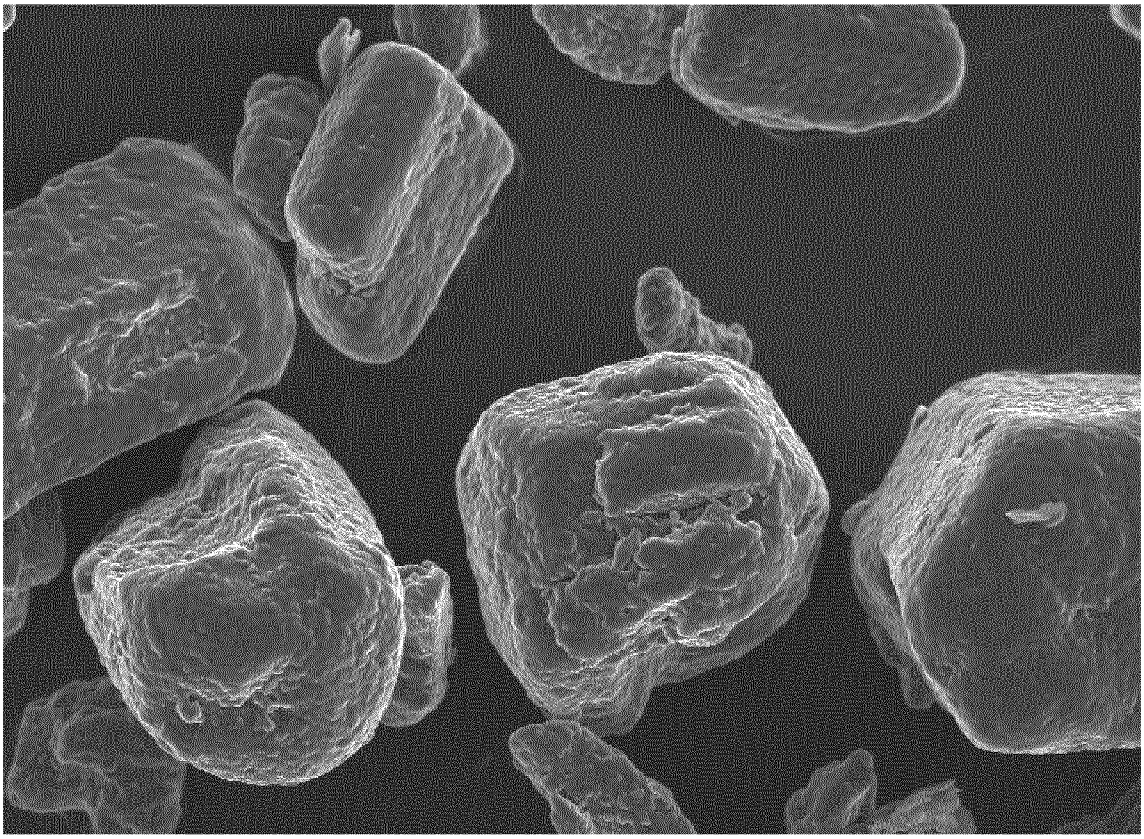

Fig. 8

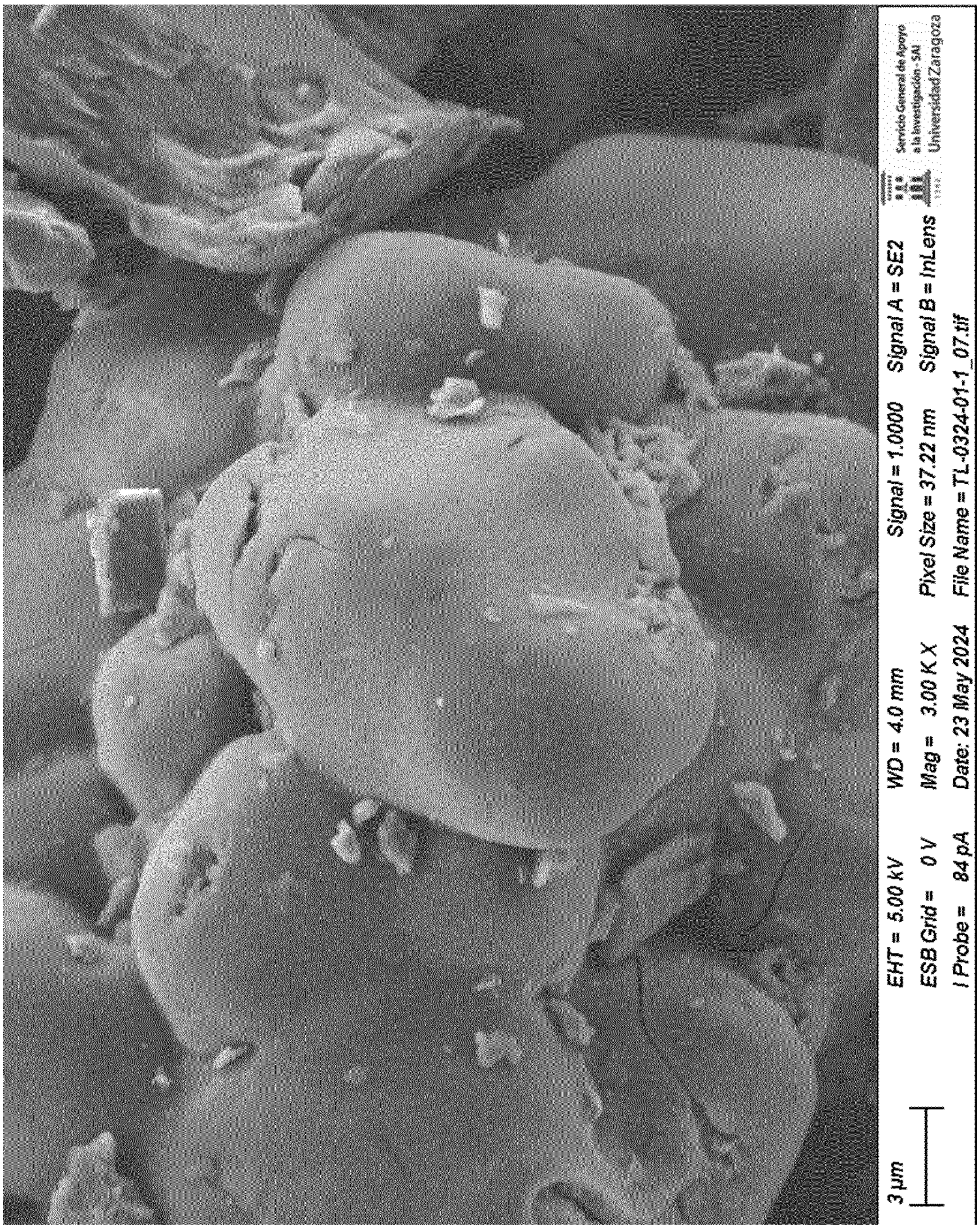
3 µm
EHT = 5.00 kV
ESB Grid = 0 V
I Probe = 84 pA
WD = 4.0 mm
Mag = 3.00 K X
Date: 23 May 2024
Signal = 1.0000
Pixel Size = 37.22 nm
File Name = TL-0324-01-1_07.tif
Signal A = SE2
Signal B = InLens
Servicio General de Apoyo a la Investigación - SAI
Universidad Zaragoza

Fig. 9

Europäisches Patentamt
European Patent Office
Office européen des brevets

# EUROPÄISCHER RECHERCHENBERICHT

Nummer der Anmeldung
EP 24 20 6940

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | DE 10 2007 035417 A1 (CHEM FAB BUDENHEIM KG [DE]) 29. Januar 2009 (2009-01-29)<br>* Absätze [0010], [0011]; Ansprüche; Beispiele 4, 6-8, 12, 13; Tabelle 1 * | 1-5,7-9, 12-15<br>10,11 | INV.<br>C09K21/04<br>C08K3/32<br>C08K5/3492 |
| X | US 2005/245656 A1 (SINCLAIR MICHAEL J [GB]) 3. November 2005 (2005-11-03)<br>* Absätze [0005] - [0007]; Ansprüche * | 1,2,5-9, 13-15 | |
| Y | DE 10 2021 119326 A1 (BUDENHEIM KG CHEMISCHE FABRIK [DE]) 26. Januar 2023 (2023-01-26)<br>* Absätze [0054], [0078]; Ansprüche * | 10,11 | |
| A | DE 699 36 921 T2 (CIBA SC HOLDING AG [CH]) 15. Mai 2008 (2008-05-15)<br>* Ansprüche; Beispiele * | 1-15 | |

RECHERCHIERTE SACHGEBIETE (IPC)
C09K
G02F
C08K

Der vorliegende Recherchenbericht wurde für alle Patentansprüche erstellt

1

| Recherchenort | Abschlußdatum der Recherche | Prüfer |
|---|---|---|
| Den Haag | 12. März 2025 | Schoenhentz, Jérôme |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 20 6940

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2025

| Im Recherchenbericht angeführtes Patentdokument | Datum der Veröffentlichung | Mitglied(er) der Patentfamilie | Datum der Veröffentlichung |
|---|---|---|---|
| DE 102007035417 A1 | 29-01-2009 | AT E458782 T1 | 15-03-2010 |
| | | AT E463531 T1 | 15-04-2010 |
| | | CN 101765629 A | 30-06-2010 |
| | | CN 101772537 A | 07-07-2010 |
| | | DE 102007035417 A1 | 29-01-2009 |
| | | EP 2057220 A1 | 13-05-2009 |
| | | EP 2074166 A1 | 01-07-2009 |
| | | ES 2340823 T3 | 09-06-2010 |
| | | ES 2342447 T3 | 06-07-2010 |
| | | HK 1144294 A1 | 11-02-2011 |
| | | JP 5425774 B2 | 26-02-2014 |
| | | JP 2010534756 A | 11-11-2010 |
| | | JP 2010534757 A | 11-11-2010 |
| | | KR 20100040313 A | 19-04-2010 |
| | | KR 20100040907 A | 21-04-2010 |
| | | PL 2074166 T3 | 31-08-2010 |
| | | RU 2010107372 A | 27-01-2012 |
| | | RU 2010107383 A | 27-11-2011 |
| | | US 2010227952 A1 | 09-09-2010 |
| | | US 2010298474 A1 | 25-11-2010 |
| | | WO 2009016129 A1 | 05-02-2009 |
| | | WO 2009016130 A1 | 05-02-2009 |
| US 2005245656 A1 | 03-11-2005 | AU 2003281034 A1 | 02-02-2004 |
| | | CN 1668683 A | 14-09-2005 |
| | | EP 1532200 A2 | 25-05-2005 |
| | | GB 2390607 A | 14-01-2004 |
| | | US 2005245656 A1 | 03-11-2005 |
| | | WO 2004007603 A2 | 22-01-2004 |
| DE 102021119326 A1 | 26-01-2023 | AU 2022317196 A1 | 04-01-2024 |
| | | CA 3216898 A1 | 02-02-2023 |
| | | CL 2023003242 A1 | 21-06-2024 |
| | | CN 117642484 A | 01-03-2024 |
| | | DE 102021119326 A1 | 26-01-2023 |
| | | EP 4377419 A1 | 05-06-2024 |
| | | IL 308555 A | 01-01-2024 |
| | | JP 2024528788 A | 01-08-2024 |
| | | KR 20240036524 A | 20-03-2024 |
| | | TW 202323420 A | 16-06-2023 |
| | | US 2024352228 A1 | 24-10-2024 |
| | | WO 2023006622 A1 | 02-02-2023 |
| DE 69936921 T2 | 15-05-2008 | AT E370937 T1 | 15-09-2007 |
| | | AU 758311 B2 | 20-03-2003 |
| | | BR 9911939 A | 27-03-2001 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 24 20 6940

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2025

| Im Recherchenbericht angeführtes Patentdokument | Datum der Veröffentlichung | Mitglied(er) der Patentfamilie | Datum der Veröffentlichung |
|---|---|---|---|
| | | CA 2336705 A1 | 20-01-2000 |
| | | CN 1314898 A | 26-09-2001 |
| | | DE 69936921 T2 | 15-05-2008 |
| | | EA 200100119 A1 | 25-06-2001 |
| | | EP 1095030 A1 | 02-05-2001 |
| | | ES 2292247 T3 | 01-03-2008 |
| | | IL 140755 A | 25-07-2004 |
| | | JP 2002520322 A | 09-07-2002 |
| | | JP 2011174095 A | 08-09-2011 |
| | | KR 20010053412 A | 25-06-2001 |
| | | NL 1009588 C2 | 11-01-2000 |
| | | PL 345386 A1 | 17-12-2001 |
| | | TW 457269 B | 01-10-2001 |
| | | US 6653474 B1 | 25-11-2003 |
| | | US 2001005745 A1 | 28-06-2001 |
| | | WO 0002869 A1 | 20-01-2000 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19517499 A1

### In der Beschreibung aufgeführte Nicht-Patentliteratur

- **A. D. MCNAUGHT** ; **A. WILKINSON**. IUPAC. Compendium of Chemical Terminology. Blackwell Scientific Publications, 1997
- **A. D. MCNAUGHT,** ; **A. WILKINSON,**. IUPAC. Compendium of Chemical Terminology. Blackwell Scientific Publications,, 1997